# EUROPEAN PATENT APPLICATION

(11) **EP 1 919 220 A2**
(43) Date of publication of application: **07.05.2008**
(21) Application number: 07017209.3
(22) Date of filing: 03.09.2007
(51) Int. Cl.: H04N 7/24

(54) **Method and apparatus for dynamic bandwidth allocation of video over a digital subscriber line**

(30) Priority: 26.10.2006 US 553106
(71) Applicant: General instrument Corporation, Horsham PA 19044 (US)
(72) Inventor: Wirick, Kevin S., Olivenhain California 92024 (US); Elstermann, Erik J., Carlsbad California 92011 (US); Luthra, Ajay K., San Diego California 92130 (US)
(74) Representative: Openshaw, Paul Malcolm

(57) **Abstract**

A method and apparatus for managing bandwidth of video and data over DSL is disclosed. Incoming packets of data are first inspected to determine if the data is video data or other (non-video) data. The video data is further analyzed to determine if it is intended for real-time delivery to the subscriber or if the video data is intended for viewing at a later time by the subscriber. Video data intended for real-time delivery to the subscriber is re-compressed to optimize the video quality. Statistical multiplexing is performed on the video data for real-time delivery, the video data for viewing at a later time, and the non-video data. The bandwidth needs for the video data for real-time delivery, the video data for viewing at a later time, and the non-video data are all evaluated. Bandwidth is then allocated to the video data for real-time delivery, the video data for viewing at a later time, and the non-video data, based on the video data service quality requirements and latency sensitivity of the non-video data.

## Description

### BACKGROUND OF THE DISCLOSURE

1. Field of the Disclosure

The present disclosure relates to bandwidth management. More specifically, the present disclosure relates to dynamically allocating bandwidth of video and data over a digital subscriber line.

2. General Background

IPTV (Internet Protocol Television) describes a system where a digital television service is delivered to subscribing consumers using the Internet Protocol over a broadband connection. IPTV is expected to grow at a brisk pace in the coming years as broadband is now available to more than 100 million households worldwide. Broadband access is commonly provided to subscribers through telephone lines via a Digital Subscriber Line (DSL) or through the cable television network.

The individual subscriber capacity of multicast networks with a dedicated physical connection between content sources and a multitude of consumers is limited by the worst case subscriber bandwidth capacity. An example is an internet protocol television (IPTV) digital subscriber loop (DSL) distribution network that has centralized content aggregation, distributes content to Central Offices, which in turn distributes content to DSL Access Multiplexers (DSLAMs) which drive bandwidth limited twisted pair copper wires connected to individual subscriber residences.

Using common video sources, the video bandwidth allocated to all subscribers is determined by the maximum bandwidth that can be achieved over the most difficult physical connection. An objective is to maximize the overall combination of multi-media services, such as real-time video, digital video recorder downloads, VolP traffic, web-based services, and file transfers delivered to individual consumers while remaining within the bounds set by the link.

A multicast network such as the DSL network consists of both audio/video entertainment services and data services. For example, audio/video services may be provided in both high definition (i.e. HDTV) and standard definition. Furthermore, audio/video content can transmitted for viewing in real-time or for recording and viewing at a later time. Even further, data bandwidth is reserved for high speed internet traffic such as web browsing.

However, each of these services are typically managed using fixed or static bandwidth assignments. Assigning only a fixed amount of bandwidth to compressed video ignores the fundamental nature of compressed video. The data rate required to transmit compressed video while maintaining the same quality of video varies depending on the content. Video compression is achieved by exploiting the redundancy that is inherent in video content by efficiently coding and transmitting the changes in video and not constantly transmitting the unchanged content as is done with analog video transmission systems.

For example, when a video scene changes or has new content the data rate is high. When the content is relatively unchanged, such as with a newscast announcer speaking with a fixed background, the data rate can be much lower. Therefore, the data rate for video varies greatly. Allocating a constant data rate for digital video typically results in both loss of picture quality during challenging scenes, and waste of bandwidth at times when the content remains relatively unchanged.

The static bandwidth approach for DSL needs to provide interchangeability between content channels for different subscribers, so it does not take advantage of differing video bandwidth requirements. So in the DSL model, every standard definition program is transmitted at one constant bit rate and all high definition programs at a second constant bit rate which simplifies bandwidth management.

### SUMMARY

A method for dynamically managing bandwidth of data transmitted to a subscriber of a digital subscriber line is disclosed. Incoming packets of data are first inspected to determine if each of the data packets includes video data or non-video data. Data packets including video data are classified as video data packets, and data packets including non-video data are classified as non-video data packets. The video data is further analyzed to determine if it is intended for real-time delivery to the subscriber or if the video data is intended for viewing at a later time by the subscriber. Video data packets that are intended for real-time delivery to the subscriber are classified as a plurality of real-time video data packets and the remaining video data packets that are intended for subsequent-time delivery to the subscriber are classified as a plurality of subsequent-time video data packets. The plurality of real-time video data packets are re-compressed to optimize the video quality. Statistical multiplexing is performed on the plurality of real-time video data packets, the plurality of subsequent-time video data packets, and the plurality of non-video data packets. The bandwidth needs for the real-time video data packets, the subsequent-time video data packets, and the non-video data are all evaluated. Bandwidth is then allocated to the video data for real-time delivery, the video data for viewing at a later time, and the non-video data, based on the video data service quality requirements and latency sensitivity of the non-video data.

In another embodiment, a method for dynamically managing bandwidth of video data received by a subscriber of a digital subscriber line is disclosed. Video data is analyzed to determine if it is being viewed in real-time or downloaded for viewing at a later time by the subscriber. Statistical multiplexing is employed to allocate bandwidth across the video data and non-video data. Video being viewed in real time is allocated a maximum bandwidth to ensure quality of service, while video data being downloaded for viewing at a later time is delayed or buffered. Non-video data services are delayed or buffered according to the latency sensitivity of the data.

In another embodiment, an apparatus for dynamically allocating bandwidth of data to individual subscribers over a digital subscriber line is disclosed. A packet inspecting module for inspecting incoming data first categorizes data packets as to the type of data. A video compression module re-compresses video to optimize the quality of the video. A statistical multiplexer manages video intended for real time delivery to the subscriber to provide the best video quality for the available bandwidth. A memory is used to buffer at least a portion of the non-video data in order to provide additional bandwidth to the video for real-time delivery. A bandwidth allocation module receives bandwidth needs of the video and non-video data and allocates bandwidth across the video and non-video data according to need. A multiplexer combines the video data and non-video data signals and transmits a single data stream to the subscriber.

### BRIEF DESCRIPTION OF THE DRAWINGS

So that the manner in which the above recited features of the present invention can be understood in detail, a more particular description of the invention, briefly summarized above, may be had by reference to embodiments, some of which are illustrated in the appended drawings. It is to be noted, however, that the appended drawings illustrate only typical embodiments of this invention and are therefore not to be considered limiting of its scope, for the invention may admit to other equally effective embodiments.

FIG. 1 is a block schematic of an exemplary device in accordance with the present disclosure.

FIG. 2 is a diagram of an exemplary system in accordance with the present disclosure.

FIG. 3 is a diagram of one embodiment of the data flow through a bandwidth management device in accordance with the present disclosure.

FIG. 4 is a block diagram of one embodiment of an apparatus for managing bandwidth over DSL in accordance with the present disclosure.

FIG. 5 is a block diagram of one embodiment of an apparatus for managing bandwidth over DSL in accordance with the present disclosure.

FIG. 6 is a flow diagram of one embodiment of a method for managing bandwidth in accordance with the present disclosure.

### DETAILED DESCRIPTION

An apparatus and method to optimize the effective bandwidth to individual subscribers of multimedia services delivered to subscribers in a multicast bandwidth constrained network such as IPTV over DSL is disclosed herein.

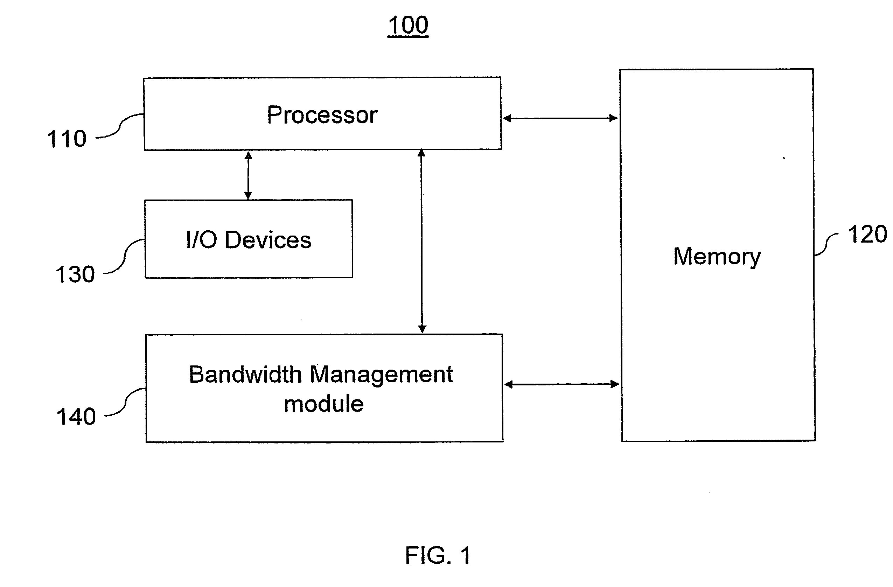

FIG. 1 illustrates a block diagram of one embodiment of a bandwidth management device or system 100 in accordance with the present disclosure. Specifically, the system can be employed to optimize the effective bandwidth of individual subscribers of a bandwidth constrained network, such as DSL. In one embodiment, the bandwidth management device or system 100 is implemented using a general purpose computer or any other hardware equivalents.

Thus, in one embodiment, the bandwidth management device or system 100 comprises a processor (CPU) 110, a memory 120, e.g., random access memory (RAM) and/or read only memory (ROM), bandwidth management module 140, and various input/output devices 130, (e.g., storage devices, including but not limited to, a tape drive, a floppy drive, a hard disk drive or a compact disk drive, a receiver, a transmitter, a speaker, a display, an image capturing sensor, e.g., those used in a digital still camera or digital video camera, a clock, an output port, a user input device (such as a keyboard, a keypad, a mouse, and the like, or a microphone for capturing speech commands)).

It should be understood that the bandwidth management module 140 can be implemented as one or more physical devices that are coupled to the CPU 110 through a communication channel. Alternatively, the bandwidth management module 140 can be represented by one or more software applications (or even a combination of software and hardware, e.g., using application specific integrated circuits (ASIC)), where the software is loaded from a storage medium, (e.g., a magnetic or optical drive or diskette) and operated by the CPU in the memory 120 of the computer. As such, the bandwidth management module 140 (including associated data structures) of the present invention can be stored on a computer readable medium, e.g., RAM memory, magnetic or optical drive or diskette and the like.

In another embodiment, the bandwidth management system is implemented in a more hardware specific device such as a router or switch.

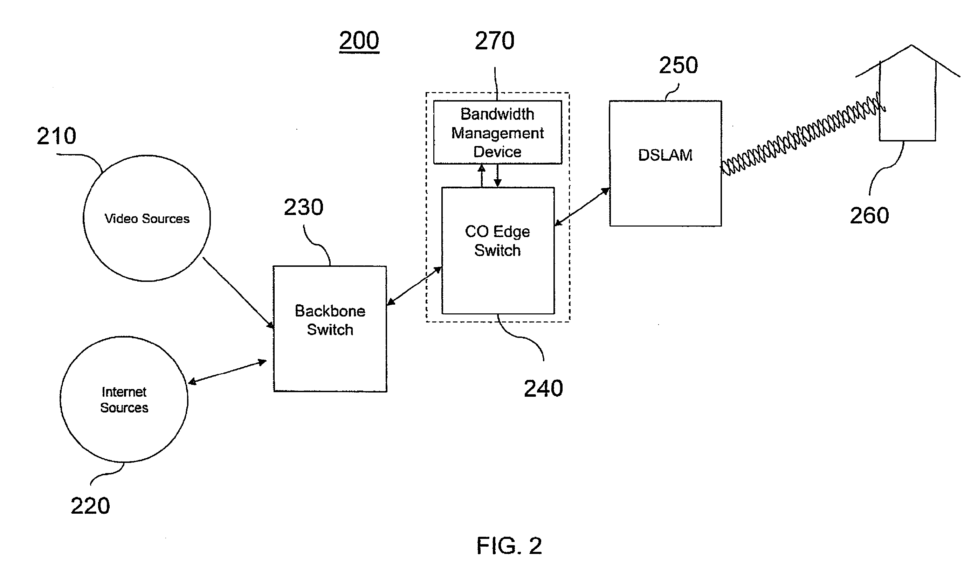

FIG. 2 illustrates a diagram of one embodiment of a system or network employing an apparatus or device of bandwidth management in accordance with the present disclosure. The bandwidth management device may for example be implemented within a multicast network 200 including DSL connections. In an exemplary network 200, data from data sources including video sources 210 and internet sources 220 is routed through backbone switch 230 and distributed to Central Office 240. Central office 240 in turn distributes content to DSL Access Multiplexers (DSLAMs) 250 which drive bandwidth limited twisted pair copper wires connected to individual subscriber residences 260.

A device in accordance with the present disclosure for managing bandwidth of video and non-video data to individual subscribers is shown at 270. In one embodiment, the bandwidth management device is located at the Central Office, and manages bandwidth allocation to a plurality of subscriber homes, as serviced by the central office. In one embodiment, it is foreseen that the bandwidth management device will be used in a video network infrastructure multiplexer for a Telco DSL network.

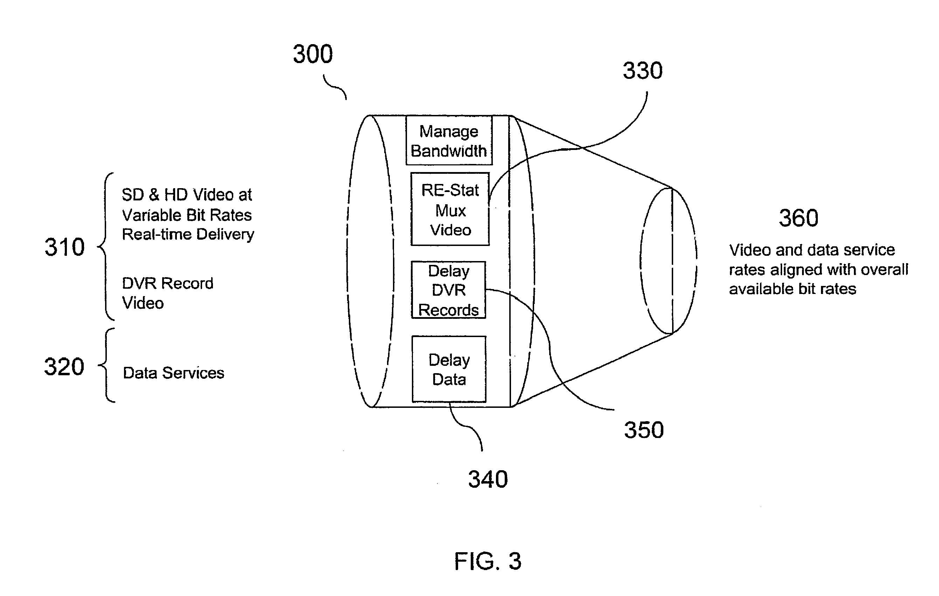

A device that exploits the varying nature of video, and the latency tolerance for different types of data traffic, to optimize bandwidth utilization on an individual subscriber basis is hereby disclosed. The device operates on the downstream content for a single subscriber, or over a unicast connection. A high level overview of the data flow through such a bandwidth management device is illustrated in FIG. 3. Examples of incoming data are shown on the left hand side as inputs to the bandwidth management device 300. Broadly defined, data can be classified as video data 310 and non-video data 320.

Examples of video data 310 include both standard definition (SD) and high definition (HD) video, which may be provided to a subscriber for viewing in real-time or for viewing at some later time. Digital video recorder (DVR) downloads or recordings are examples of video which is not viewed in real-time with the data transmission.

Non-video data 320, includes just about any data service accessible through a computer network. Common examples of non-video data include web page downloads, file transfers such as (FTP), voice over IP (VOIP), etc. Such non-video data 320 can be further classified according to how tolerant the data is of delay. For example, voice over IP data is potentially quite sensitive to delay, while a web page download is tolerant of a delay.

The bandwidth management device 300 first classifies incoming data traffic according to its type. For example, data may first be classified as video data 310, or non-video data 320. Video data may further be classified as video for real-time delivery or non-real time delivery. Non-video data may further be classified according to how sensitive the data is to a delay in transmission, or as delay sensitive data traffic, or delay insensitive data traffic.

Since video intended for viewing in real-time may require a significant amount of bandwidth in comparison to other data types, and further result in a noticeable loss of quality if bandwidth is not sufficient, it is given the highest priority. The incoming data traffic is processed to maximize video quality and bandwidth. Video intended for real time delivery is re-compressed to offer the best quality for the bandwidth limitations to each subscriber. The re-compressed video is then statistically multiplexed to effectively manage the bandwidth required for maintaining the video quality, as indicated at block 330.

DSL Video Network traffic is generated by active TV viewing and background DVR downloads. However, background DVR download of HD content combined with active viewing of HD content can greatly strain a DSL fixed pipe. Background DVR downloads that are not viewed in real-time have very low latency sensitivity, since a program download could complete minutes after the real-time program and still be unnoticed by the subscriber.

Therefore, the transmission of data such as video for delivery in non-real (or for viewing at a later) time, and other delay tolerant data may be delayed in order to temporarily provide additional bandwidth as needed to the real-time video data. When there is lesser bandwidth demand for real-time video, there may be little or no delay of non-video data. Data such as background DVR data is therefore delivered as bandwidth becomes available, or for example, during more compressible scenes in the real-time video.

The result of this processing where bandwidth allocated to each service varies depending on the complexity of video and the latency sensitivity of the data services is a greater effective bandwidth than is possible when each service has a fixed bandwidth assignment.

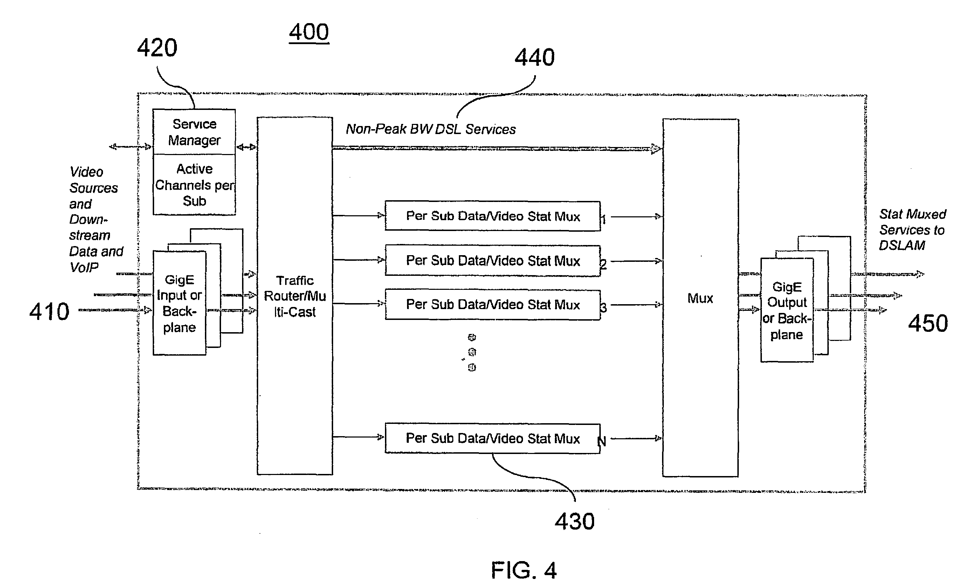

Processing performed by a device to achieve dynamic bandwidth allocation in accordance with the present disclosure is diagramed in FIG. 4. Downstream traffic for all DSL customers is input to the device 400, as shown at the left side of the diagram at 410. The logic in the upper left corner 420 keeps track of which DSL subscribers are approaching the limits of a static bandwidth assignment. The downstream traffic for subscribers with the most demands, either due to multiple simultaneous video channel viewing, high data service usage, or maximum distance for a DSL circuit, will be processed to increase effective bandwidth. Statistical multiplexing is therefore performed on data for subscribers who are reaching the limits of their bandwidth assignment, as indicated at 430. Downstream traffic for those subscribers not approaching the limit will be bypassed without additional processing, as is indicated at 440. The data output 450 of bandwidth management device 400 is then transmitted to the DSLAM for transmission to each subscriber.

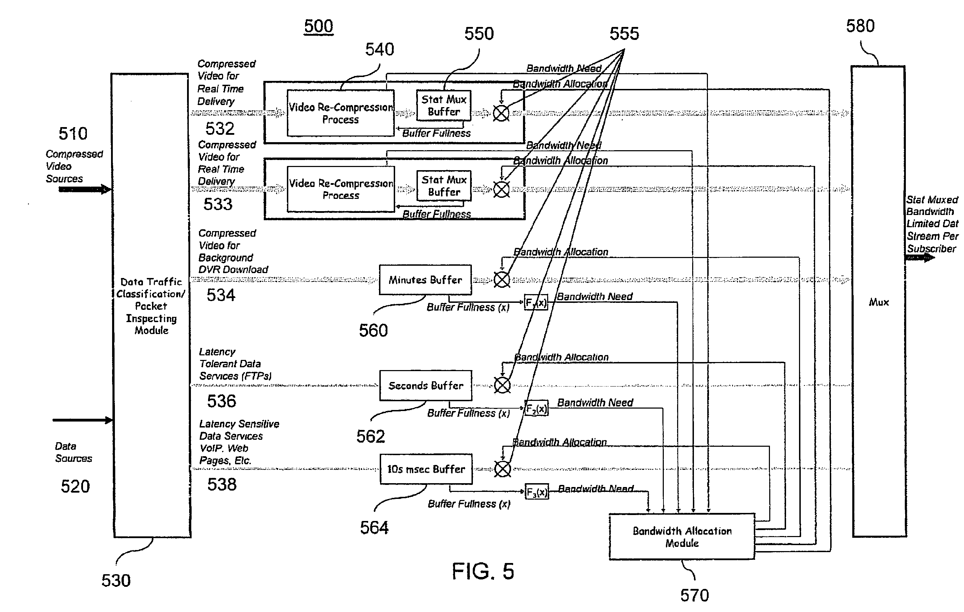

FIG. 5 details the processing performed on the downstream traffic for the most demanding subscribers. This processing is performed uniquely per subscriber to create the most efficient use of bandwidth for the specific combination of simultaneous audio/video and non-video data services that the subscriber is receiving. This device operates by executing the following process on downstream traffic for an individual high demand customer.

As previously discussed, data can be classified as either video data 510 or other (non-video) data 520. Non-video data 520 generally comprises any data not considered video data. This for example includes web page downloads, ftp transfers, Voice over IP data, etc. Incoming data packets (510 and 520) are first inspected by a packet inspecting module 530 to determine if the traffic is classified as video data or non-video data. If the data is classified as non-video data, then conventional policy management techniques can be applied to administer Quality of Service queuing.

However, for video traffic, which generally requires higher bandwidth requirements, further inspection is required. Therefore, as described above, video data is further classified according to its priority. Video data is further analyzed to determine if the video is intended for viewing in real time (such as a live television broadcast or an on-demand request), or if it is instead intended for viewing at a later time (such as a DVR download). For example, communication with the set top box can determine if the service is being viewed in real-time or if it is for background DVR download.

As is seen in FIG. 5, data is temporarily separated according to such classifications by the packet inspecting module 530. The different exemplary classifications of data are shown as outputs of the packet inspecting module 530. For example, video for real-time delivery is indicated by arrows 532 and 533, video for background DVR download as 534, latency tolerant data services 536 such as FTP downloads and web page data, and latency sensitive data services 538 such as voice over IP data.

Real time video traffic is re-stat muxed 550 together to provide the best video quality for the available bandwidth and the collection of programs that are being simultaneously viewed. The device in accordance with the present disclosure employs traditional video statistical multiplexing based on compressability of content. A video compression module 540 is provided for re-compressing video to optimize the quality of the video. Re-stat muxing is accomplished by processing the compressed MPEG data to reduce bandwidth required in a manner that maintains the best video quality.

Each type of data is specified a bandwidth allocation 555. The bandwidth allocation for each type of data may be variable and is managed by the bandwidth allocation module 570. Each type of data is fed through a buffer which accumulates data when the data rate exceeds the bandwidth allocation specified at the time. The buffer fullness for each type of data is constantly monitored, and a bandwidth need is calculated based on a function of the buffer fullness. Generally speaking, a greater buffer fullness results in a higher bandwidth need. Similarly, when the buffer is relatively empty, there is little or no need for additional bandwidth. This bandwidth need, as indicated by functions F₁(x), F₂(x), F₃(x), etc. in FIG. 5 is sent as an input to the bandwidth management module 570. The bandwidth management module considers the bandwidth need for each type of data, and re-allocates bandwidth accordingly.

The buffer size is generally related to the nature of and the type of data. For example, data services are buffered into memories 562 and 564 according to the delay sensitivity of the particular service. For example, voice over IP (VoIP) has very tight latency requirements of 10's of milliseconds to ensure that annoying delays are not introduced into a telephone call, while a web page download can tolerate 100's of milliseconds, while a large file transfer over 10's of seconds can tolerate seconds of delay.

The delay of data other than real-time video data is managed by a stat mux controller that performs bandwidth allocation across data and video. Input to the bandwidth allocation module 570 is a "Bandwidth Need" request that is an indication of the complexity of the video material or the size of the queue for a data service. Video for non real time delivery, or background DVR downloads are often delayed and buffered in a memory 560 to create momentary additional bandwidth for the real time video to allow better quality when multiple sources have simultaneous peak bandwidth demands.

The output is a "Bandwidth Allocation" command that dynamically allocates bandwidth to the data and video services. The result of this process is an aggregation of variable rate services that combine to fill a fixed bandwidth DSL pipe. By dynamically varying the bandwidth allocated to each service based on the need, a higher effective bandwidth is achieved than possible using the static bandwidth assignments described earlier.

Each type of data is transmitted at a variable rate as managed by the bandwidth allocation module and multiplexed together for transmission to the subscriber, as shown by mux 580.

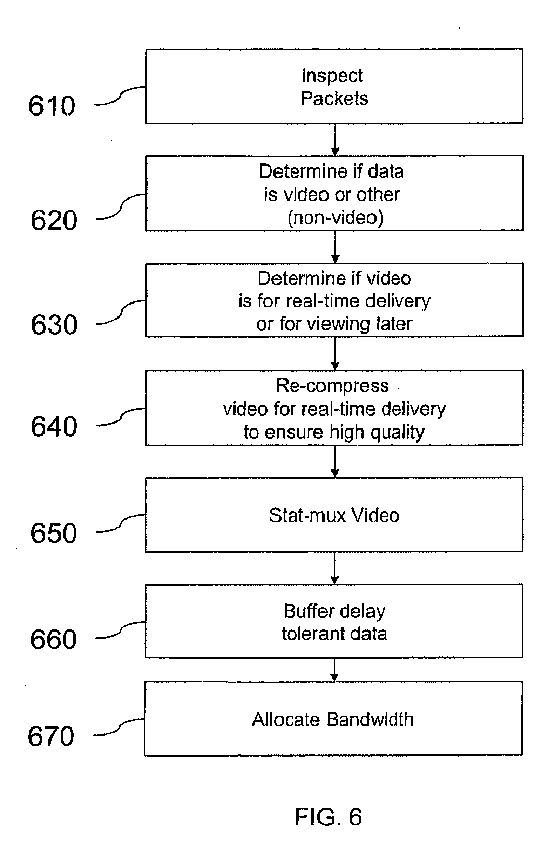

FIG. 6 is a block flow diagram of one embodiment of a bandwidth management method in accordance with the present disclosure.

Incoming packets of data are first inspected at block 610 and classified by type of data. In one embodiment, a packet inspection module determines if the data is video data or other (non-video) data as indicated at block 620. Video data is further analyzed to determine if it is intended for real-time delivery to the subscriber or if the video data is intended for viewing at a later time by the subscriber as indicated at block 630. Video data intended for real-time delivery to the subscriber is re-compressed to optimize the video quality as indicated at block 640. Statistical multiplexing is performed on the video data for real-time delivery, the video data for viewing at a later time, and the non-video data as indicated at block 650. The bandwidth needs for the video data for real-time delivery, the video data for viewing at a later time, and the non-video data are all evaluated. If additional bandwidth is required for the real-time video; other delay tolerant data is buffered and its transmission is delayed temporarily, as indicated at block 660. Bandwidth is then allocated to each the video data for real-time delivery, the video data for viewing at a later time, and the non-video data, based on the video data service quality requirements and latency sensitivity of the non-video data, as indicated at block 670. In one embodiment, a bandwidth allocation module performs this function.

The apparatus and method of the present disclosure provides greater efficiency of the fixed DSL bandwidth which reduces the amount of equipment required to be placed near consumer's homes and provides greater effective bandwidth allowing higher quality video and data, and more simultaneous video channels.

Although certain illustrative embodiments and methods have been disclosed herein, it will be apparent form the foregoing disclosure to those skilled in the art that variations and modifications of such embodiments and methods may be made without departing from the true spirit and scope of the art disclosed. Many other examples of the art disclosed exist, each differing from others in matters of detail only.

Finally, it will also be apparent to one skilled in the art that the above described system and method of bandwidth management could be used for any combination of data types having differing latency requirements. The system and method of bandwidth management is useful to any other, non-DSL, networks where one wants to multiplex time-sensitive media with time-insensitive (VoD, data etc). Furthermore, the present disclosure may be applicable to time insensitive video data such as video on demand. Even further, other forms of media beyond video (for example, audio) could be managed through use of the present disclosure. Accordingly, it is intended that the art disclosed shall be limited only to the extent required by the appended claims and the rules and principles of applicable law.

## Claims

1. A dynamic bandwidth allocation apparatus comprising:
a packet inspecting module for inspecting incoming data over a digital subscriber line and categorizing incoming data packets as to the type of data;
a video compression module for re-compressing video to optimize the quality of video;
a statistical multiplexer for managing video for real time delivery to the subscriber to provide the best video quality for the available bandwidth;
a memory for buffering at least a portion of non-video data;
a bandwidth allocation module for receiving bandwidth needs of the video and non-video data and allocating bandwidth across the video and non-video data; and
a multiplexer for combining the video and non-video data signals and transmitting a single data stream to the subscriber.

2. The apparatus of claim 1 wherein the apparatus is located at the central office.

3. The apparatus of claim 1 wherein the packet inspecting module determines if data is video or non-video data.

4. The apparatus of claim 3 wherein the packet inspecting module further determines if non-video data is delay tolerant or delay intolerant.

5. The apparatus of claim 3 wherein the packet inspecting module further determines if video data is video intended for real-time delivery or for download and viewing at a later time.

6. The apparatus of claim 1 wherein video is MPEG4 video.

7. A method of dynamically managing bandwidth of data, comprising:
inspecting data packets to determine if each of the data packets includes video data or non-video data;
classifying the data packets that include video data as video data packets;
classifying the data packets that include non-video data as non-video data packets;
determining, for each of the video data packets, if the video data is intended for real-time delivery to a subscriber;
classifying the video data packets that are intended for real-time delivery to the subscriber as a plurality of real-time video data packets;
classifying the remaining video data packets that are intended for subsequent-time deliver to a the subscriber as a plurality of subsequent-time video data packets;
compressing the plurality of real-time video data packets to optimize video quality;
evaluating the bandwidth needs for the real-time video data packets, the subsequent-time video data packets, and the non-video data;
performing statistical multiplexing on the plurality of real-time video data packets, the plurality of subsequent-time video data packets, and the plurality of non-video data packets; and
allocating bandwidth to each of the plurality of real-time video data packets, the plurality of subsequent-time video data packets, and the plurality of non-video data packets based on the video data service quality requirements and latency sensitivity of the non-video data.

8. The method of claim 7 wherein the method for dynamically managing bandwidth is performed at the central office.

9. The method of claim 8 wherein the method for dynamically managing bandwidth is performed on a per subscriber basis.

10. The method of claim 7 wherein determining, for each of the video data packets, if the video data is intended for real-time delivery to a subscriber is performed by communicating with a set top box at the subscriber's location.

11. The method of claim 7 wherein the real-time video data packets are assigned a high priority.

12. The method of claim 7 wherein the non-video data packets are assigned a low priority.

13. The method of claim 7 wherein data of a higher priority is allocated a higher bandwidth than data of a lower priority.

14. The method of claim 7 wherein video data intended for viewing at a later time is delayed.

15. The method of claim 7 wherein video data intended for viewing at a later time is stored on a digital video recorder.

16. The method of claim 7 wherein bandwidth is allocated at approximately 10 msec intervals.

17. The method of claim 7 further comprising the step of determining whether the non-video data is delay tolerant or delay intolerant.

18. The method of claim 17 wherein the non-video data determined to be delay intolerant is allocated a higher priority.

19. The method of claim 17 wherein the non-video data determined to be delay tolerant is buffered.

20. A method for dynamically managing bandwidth of video data, comprising:
analyzing each of a plurality of video data packets to determine if the video data packet is being viewed in real-time or downloaded for viewing at a later time; and
allocating bandwidth across video data and non-video data, the video data packets being viewed in real time being allocated a maximum bandwidth to ensure quality of service, the video data packets being downloaded for viewing at a later time is delayed, and non-video data packets being delayed according to the latency sensitivity of the non-video data.

21. The method of claim 20 wherein the method for dynamically managing bandwidth is performed at the central office.

22. The method of claim 20 wherein the video data packets being viewed in real time are assigned a high priority.

23. The method of claim 20 wherein the video data packets intended for viewing at a later time may be delayed.

24. The method of claim 20 wherein bandwidth is allocated at approximately 10 msec intervals.

25. The method of claim 14 further comprising the step of determining whether the non-video data is delay tolerant or delay intolerant.

26. The method of claim 20 wherein the video data is received by a subscriber of a digital subscriber line.
